# EUROPEAN PATENT APPLICATION

(11) **EP 4 425 407 A1**
(43) Date of publication of application: **04.09.2024**
(21) Application number: 22885679.5
(22) Date of filing: 12.10.2022
(51) Int. Cl.: G06Q 20/30

(54) **METHOD AND APPARATUS FOR INTERNET OF THINGS PAYMENT BASED ON SMART CONTRACT**

(30) Priority: 29.10.2021 CN 202111277335
(71) Applicant: Digital Currency Institute, The People's Bank of China, Beijing 100071 (CN)
(72) Inventor: MU, Changchun, Beijing 100071 (CN); DI, Gang, Beijing 100071 (CN); GUO, Wei, Beijing 100071 (CN); ZHAO, Xinyu, Beijing 100071 (CN); SHI, Zhan, Beijing 100071 (CN); CUI, Peidong, Beijing 100071 (CN)
(74) Representative: Viering, Jentschura & Partner mbB Patent- und Rechtsanwälte
(86) International application number: PCT/CN2022/124878
(87) International publication number: WO 2023/071800

(57) **Abstract**

Provided is an internet of things payment method and apparatus based on a smart contract, which relates to the technical field of internet of things. A particular embodiment of the method comprises: deploying the smart contract to an internet of things device, performing a contract registration so as to and enable the smart contract to enter a monitoring state; and monitoring an external event by the smart contract, and switching, in a situation that the external event satisfies a trigger condition, the smart contract from the monitoring state to an executing state for internet of things payment; wherein the smart contract in the executing state still continues to monitor the external event. According to the embodiment, trusted payment, reliable user privacy protection and safe and convenient transaction payment are achieved.

## Description

### Cross-Reference to Related Application

The disclosure claims the priority to Chinese Patent Application No. 202111277335.4, filed on October 29, 2021 and entitled "Internet of things payment method and apparatus based on smart contract", which is incorporated herein by reference as a part or in its entirety.

### Technical Field

The disclosure relates to the technical field of internet of things, and particularly relates to internet of things payment method and apparatus based on smart contract.

### Background

As the internet of things flourishes, the security problem of internet of things payment is increasingly severe. It is crucial for payment events to initiate and confirm a transaction. The transaction is initiated generally by collecting data, while the confirmation of a transaction is mainly by a third-party payment platform authorized by a user at present.

In a process of implementing the disclosure, the inventors find that the related art has problems as follows:
Firstly, since numerous internet of things devices exist and most devices are not portable, it is inconvenient for a user to confirm a payment transaction in real time. Secondly, personal information of transaction payment is managed by an operator of an internet of things device, resulting in a risk of user privacy leakage. Finally, a transaction trigger condition based on third-party payment has a risk of dishonesty, causing transaction disputes, asset losses and other problems.

### Summary

In view of this, embodiments of the disclosure provide internet of things payment method and apparatus based on smart contract. On the basis of a trusted payment scenario actively perceived by the smart contract and a security awareness mechanism capable of bidirectional measurement, by applying the smart contract to an internet of things device, trusted payment, reliable user privacy protection and safe and convenient transaction payment are achieved.

In order to realize the above objective, a first aspect of an embodiment of the disclosure provides an internet of things payment method based on a smart contract, the method including:
deploying the smart contract to an internet of things device, performing a contract registration so as to enable the smart contract to enter a monitoring state; and
monitoring an external event by the smart contract, and switching, in a situation that the external event satisfies a trigger condition, the smart contract from the monitoring state to an executing state for internet of things payment; wherein
the smart contract in the executing state still continues to monitor the external event.

According to one or more embodiments of the disclosure, the smart contract comprises three parts of a payee contract, a payer contract and a payment channel contract, and the three parts are separately deployed to one or more internet of things devices.

According to one or more embodiments of the disclosure, the monitoring an external event by the smart contract, and switching, in a situation that the external event satisfies a trigger condition, the smart contract from the monitoring state to an executing state for internet of things payment includes: monitoring the external event by the payee contract; and switching, in the situation that the external event satisfies the trigger condition, the smart contract from the monitoring state to the executing state, so as to invoke the payment channel contract by the payee contract, invoking the payer contract by the payment channel contract to process a payment request, as to perform the internet of things payment.

According to one or more embodiments of the disclosure, after performing the internet of things payment, the method further including: receiving, by the payee contract, a payment voucher returned by the payment channel contract, performing verification on the payment voucher, and completing the internet of things payment in a situation that the verification passes, wherein the payment voucher is generated after the payer contract performs the internet of things payment.

According to one or more embodiments of the disclosure, the method further including: under a condition that the payee contract, the payer contract and the payment channel contract are deployed to different internet of things devices respectively, associating respectively the payment channel contract with the payee contract and the payer contract before switching the smart contract from the monitoring state to an executing state as to perform internet of things payment; and under a condition that the payment channel contract and at least one of the payee contract and the payer contract are deployed to the same internet of things device, associating respectively the payment channel contract with the payee contract and the payer contract during performing the contract registration.

According to one or more embodiments of the disclosure, the smart contract has identity data and is able to provide an identity verification service; the identity data of the smart contract is implemented on the basis of a digital certificate and a digital signature during performing the contract registration; and the basis of the identity verification service comprises the identity data of the smart contract and a digest value of executable code of the smart contract.

According to one or more embodiments of the disclosure, the smart contract has a security level, and before the deploying the smart contract to an internet of things device, the method further includes: acquiring a security level of a module on the internet of things device to which the smart contract is to be deployed; and comparing the security level of the module with a security level of the smart contract, and determining that a comparison result satisfies a security requirement.

According to one or more embodiments of the disclosure, the smart contract is implemented as a software module on the internet of things device; security of a hardware module on the internet of things device is implemented on the basis of an initial trust root of solidified in the internet of things device; and the software module on the internet of things device is guided and executed by the initial trust root, or by other software modules guided by the initial trust root.

According to one or more embodiments of the disclosure, the security level of the module is computed according to principles as follows: the security level of the module does not exceed a security level of a first initial trust root of an execution guide chain of the module, and the execution guide chain is formed by the initial trust root for guiding the module to execute , or other software modules guided by the initial trust root; a security level of a module enhanced by a module of which other initial trust root has a higher security level is higher than the security level of the initial trust root; a security level of a module that has no confidentiality protection when loading to performed is lower than the security level of the initial trust root.

A second aspect of an embodiment of the disclosure provides an internet of things payment apparatus based on a smart contract. The apparatus including:
a contract registration module, configured to deploy the smart contract to an internet of things device, perform a contract registration so as to enable the smart contract to enter a monitoring state; and
a contract execution module, configured to monitor an external event by the smart contract, and switch, in a situation that the external event satisfies a trigger condition, the smart contract from the monitoring state to an executing state for internet of things payment. The smart contract in the executing state still continues to monitor the external event.

A third aspect of an embodiment of the disclosure provides a mobile electronic device terminal for internet of things payment based on a smart contract, including:
one or more processors; and
a storage apparatus, which is configured to store one or more programs, wherein
the one or more programs cause the one or more processors to implement the method provided in the first aspect of the embodiment of the disclosure when executed by the one or more processors.

A fourth aspect of an embodiment of the disclosure provides a computer-readable medium, storing a computer program, wherein the program implements, wherein the program implements the method provided in the first aspect of the embodiment of the disclosure when executed by a processor.

### Brief Description of the Drawings

The accompanying drawings are used for better understanding the disclosure and are not to be construed as unduly limiting the disclosure. In the accompanying drawings:
Fig. 1 is a schematic diagram of a main flow of an internet of things payment method based on a smart contract according to an embodiment of the disclosure;
Fig. 2 is a schematic deployment diagram of a smart contract according to Embodiment 1 of the disclosure;
Fig. 3 is a schematic deployment diagram of a smart contract according to Embodiment 2 of the disclosure;
Fig. 4 is a schematic deployment diagram of a smart contract according to Embodiment 3 of the disclosure;
Fig. 5 is a schematic diagram of state switch of a machine contract according to an embodiment of the disclosure;
Fig. 6 is a schematic flow diagram of internet of things payment based on a smart contract according to an embodiment of the disclosure;
Fig. 7 is a schematic flow diagram of internet of things payment based on a machine contract according to another embodiment of the disclosure;
Fig. 8 is a schematic diagram of main modules of an internet of things payment apparatus based on a smart contract according to an embodiment of the disclosure;
Fig. 9 is a diagram of an exemplary system architecture in which an embodiment of the disclosure can be applied; and
Fig. 10 is a structural schematic diagram of a computer system suitable for implementing a terminal device or server according to an embodiment of the disclosure.

### Detailed Description of the Embodiments

The following description of embodiments of the disclosure, made in combination with the accompanying drawings, includes various details of embodiments of the disclosure so as to assist in understanding, which should be considered exemplary only. Therefore, those skilled in the art should realize that various changes and modifications can be made to the embodiments described herein without departing from the scope and spirit of the disclosure. Moreover, descriptions of well-known functions and structures are omitted in the following description for clarity and conciseness.

At present, transaction payment of internet of things is generally performed by a third-party payment platform authorized by a user. The payment mode mainly has the problems that it is inconvenient for a user to confirm a payment transaction in real time, there is a lack of protection mechanism for user privacy, and transaction initiation has a risk of dishonesty such that existing internet of things payment cannot well satisfy actual application.

In order to solve the problems in the related art, the disclosure provides an internet of things payment method. On the basis of a trusted payment scenario actively perceived by the smart contract and a bidirectional measurable security awareness mechanism, by applying the smart contract to an internet of things device, to be achieved trusted payment, reliable user privacy protection and safe and convenient transaction payment.

In introduction of embodiments of the disclosure, involved terms and their meanings are as follows:
SCP: Secure Channel Protocol;
REE: Rich Execution Environment;
SE: Secure Element;
TEE: Trusted Execution Environment; and

Internet of things device: an embedded terminal device which has a networking capability and is able to perform digital currency transactions. Core functional modules of the internet of things device are an internet of things wireless module and service-related hardware peripherals.

Computing engine: a hardware functional unit is formed by a central processing unit (CPU), a random access memory (RAM) and a flash memory (Flash), which can independently complete computing tasks, excluding executable code, data, and keys. Computing engine may be a physical computing engine based on actual physical computing hardware, or a virtual computing engine based on a virtualization technology.
trust root: which is formed of executable code running on a particular computing platform and a computing engine executing the executable code, and can further include data and a key to provide a security service.

Computing platform: a general term of software and hardware modules such as a computing engine, a hardware peripheral, firmware or an operating system. A computing platform is able to independently provide an external computing service. The computing platform is required to be guided by an initial trust root or an extended trust root. The computing platform may be an actual physical computing platform based on physical hardware and software systems, or a virtual computing platform based on a virtualization technology.

Machine contract: an application model for a digital currency transaction scenario. The machine contract is able to be activated when an environmental event of an internet of things device occurs, determine whether a contract trigger condition is satisfied and execute a designated instruction after the trigger condition is satisfied.

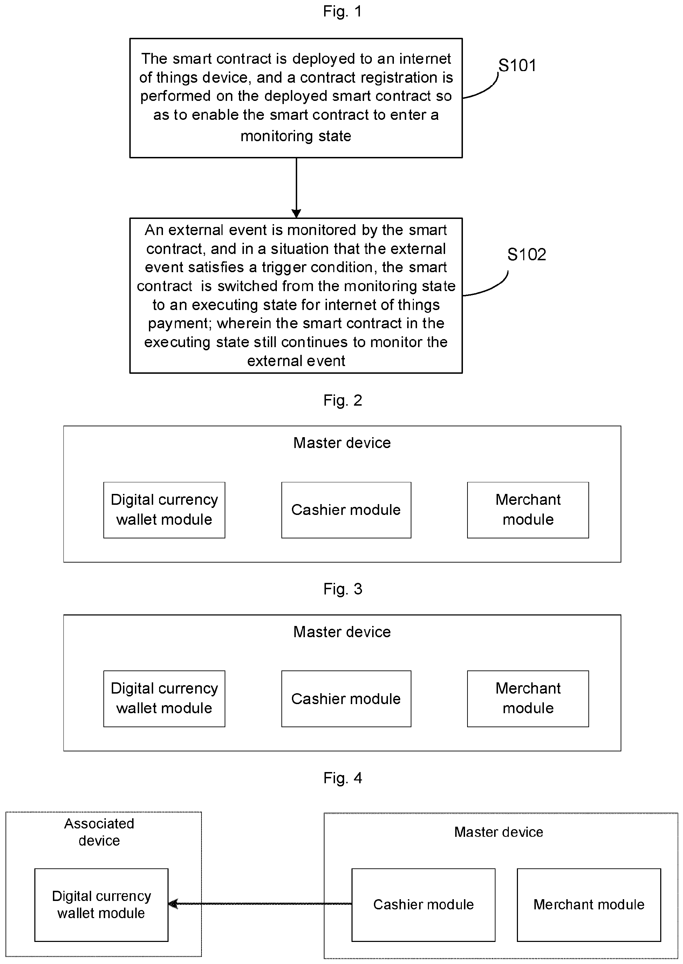

Fig. 1 is a schematic diagram of a main flow of an internet of things payment method based on a smart contract according to an embodiment of the disclosure. As shown in Fig. 1, an internet of things payment method based on a smart contract according to an embodiment of the disclosure includes S101 and S102 as follows:
S101: The smart contract is deployed to an internet of things device, and a contract registration is performed on the deployed smart contract so as to enable the smart contract to enter a monitoring state.

According to an embodiment of the disclosure, the smart contract has a security level, and before the smart contract is deployed to an internet of things device, the method further includes: a security level of a module is acquired on the internet of things device to which the smart contract is deployed; and the security level of the module is compared with a security level of the smart contract, and a comparison result satisfies a security requirement is determined. In the embodiment of the disclosure, the smart contract is deployed to an internet of things device, and therefore also called a "machine contract". A machine contract is an application model for a digital currency transaction scenario. A machine contract is able to be activated when an external environmental event of an internet of things device occurs, determine whether a contract trigger condition is satisfied and execute a conventional instruction after the contract trigger condition is satisfied. The machine contract is able to be defined and implemented on the basis of a computer programming language or an abstract syntax language. A written machine contract is required to be reviewed by relevant parties, and the reviewed machine contract is required to be compiled. Each party of relevant parties compiles the machine contract to generate executable code respectively, and computes a digest value of the executable code. The digest value is one of measurement information for identity validity verification when the machine contract is executed.

In addition to the security level, the smart contract further includes a protection mechanism for ensuring integrity and authenticity of the smart contract, basic descriptive information about a contract function, a version, etc., unique machine contract identity data for determining a machine contract instance, an internal state for storing a current state of the machine contract, an event monitoring rule for defining an external event required to be monitored by the machine contract, an action corresponding relation for defining a corresponding relation between the external event and an action, and specific action content for defining an action executable by the machine contract.

Installation and deployment of the smart contract is bidirectionally measurable. Only a smart contract that passes an authenticity verification measurement is allowed to be installed and deployed. The authenticity measurement verification can be implemented by verifying validity of a digital signature of the smart contract. Measurement information of a module on the internet of things device to which the smart contract is deployed includes a module identifier, a module owner, a module digest, a module security level requirement and a module validity signature. An installation and deployment environment of the smart contract is measured by comparing a security level of the module on the internet of things device to which the smart contract is deployed with a security level of the smart contract. Only if the authenticity measurement verification of the smart contract and security measurement of the module on the internet of things device to which the smart contract is deployed are passed, then preconditions of installation and deployment of the smart contract would be satisfied. The module identifier may be a unique identifier or a class identifier. The module owner refers to an organization that develops and manages the module. The module digest refers to a digest value of executable code of the module. The module security level requirement is used to determine whether the module can be loaded and executed. The module validity signature refers to a digital signature of the above information included in the module, and a digital certificate related to the digital signature.

According to another embodiment of the disclosure, the smart contract is implemented as a software module on the internet of things device; security of a hardware module on the internet of things device is implemented on the basis of an initial trust root solidified in the internet of things device; and the software module on the internet of things device is guided and executed by the initial trust root, or other software modules guided by the initial trust root.

For example, the payee contract, the payer contract and the payment channel contract are implemented as software modules on the internet of things device. Security of modules on the internet of things device to which the smart contract is deployed includes security of the hardware module and security of the software module. The security of the hardware module is determined by an initial trust root solidified in the internet of things device, and the security of the software module depends on the initial trust root that guides the software module's execution, or other software modules guided by the initial trust root. When the software module is guided and executed, integrity and authenticity of executable code of the software module is verified firstly, and then verify whether a basic environment for loading the software module satisfies a security level requirement of the software module.

According to another embodiment of the disclosure, the security level of the module is computed according to principles as follows: the security level of the module does not exceed a security level of a first initial trust root of an execution guide chain of the module, and the execution guide chain is formed by the initial trust root for guiding the module to execute, or other software modules guided by the initial trust root; a security level of a module enhanced by a module of which other initial trust root has a higher security level is higher than the security level of the initial trust root; a security level of a module that has no confidentiality protection when loading to performed is lower than the security level of the initial trust root.

Generally, a trust root model is formed by an initial trust root that guides the module to be executed or other software modules guided by the initial trust root. The initial trust root of the trust root model has a highest security level, which, in a case of execution of the module, is not allowed to exceed a security level of an initial trust root on an execution guide chain. Accordingly, a security level of a module that has an enhanced security level and is obtained by invoking and executing other initial trust root modules having higher security levels is enhanced from the initial trust root. A security level of a module that is obtained by invoking and executing a module having no confidentiality protection is weakened from the initial trust root. Exemplarily, after a module of which a security level of an initial trust root is 5 invokes other modules having higher security level, the security level of the module is enhanced to 5+. When the module executes a module having no confidentiality protection, the security level of the module is 5-.

According to the technical solution of an embodiment of the disclosure, the initial trust root may generally be included in a computing platform. The computing platform is a general term of inherent software and hardware modules such as a computing engine, a hardware peripheral, firmware or an operating system. The computing platform determines a security level of a hardware device. On the basis of embodiments of the disclosure, operation can be implemented in devices equipped with the following three computing platforms, or their combinations.

### (1) Rich execution environment (REE) computing platform

The REE computing platform is formed by an application processor, a memory and a flash memory, and has no capability to prevent physical attacks and logical attacks. The REE computing platform has the lowest security level. If an REE system is subjected to security reinforcement and closed management, the security level will be increased accordingly.

### (2) Trusted execution environment (TEE) computing platform

The TEE computing platform is formed by a processor having a mechanism for preventing logical attacks and some low-level physical attacks, a secure memory and a flash memory. The processor may be a processor chip shared by an application processor on the basis of a secure virtualization technology, or a separate processor chip. A security level of the TEE computing platform is higher than that of the REE computing platform, but is lower than that of a secure element (SE) computing platform.

### (3) SE or security subsystem computing platform

The SE or secure subsystem computing platform is formed by a stand-alone processor having a mechanism for preventing high-level physical attacks, a secure memory and a secure flash. The SE or secure subsystem computing platform has the highest security level.

After the smart contract passed valid signature verification and matched a security level of software and hardware modules on the internet of things device, the smart contract is installed and deployed. The smart contract successfully installed and deployed is in an initial state and is required to be subjected to personal instantiation and registration. By configuring parameter information of the smart contract, the smart contract can provide services. The registered smart contract enters a monitoring state from the initial state.

The monitoring state of the smart contract mainly involves monitoring a state switch event of an external payment scenario of the internet of things, and monitoring an invocation of the smart contract related to the internet of things payment. Specifically, after the smart contract entered the monitoring state, the payee contract monitors an external event in an internet of things payment scenario, the payment channel contract monitors an invocation event sent by the payee contract, and the payer contract monitors an invocation event sent by the payment channel contract.

S102: An external event is monitored by the smart contract, and in a situation that the external event satisfies a trigger condition, the smart contract is switched from the monitoring state to an executing state for internet of things payment; wherein the smart contract in the executing state still continues to monitor the external event.

According to an embodiment of the disclosure, the smart contract comprises three parts of a payee contract, a payer contract and a payment channel contract, and the three parts are separately deployed to one or more internet of things devices.

As at least one alternative embodiment, according to different roles and functions of the smart contract, the smart contract includes a payee contract, a payer contract and a payment channel contract that support a payee and a payer in a payment transaction. Due to functional differences of internet of things devices, the three contracts can be deployed on one or more internet of things devices to implement different functions.

In an embodiment of the disclosure, the payee contract, the payer contract and the payment channel contract may be deployed on an internet of things device to implement automatic and integrated transaction payment for the internet of things. Fig. 2 is a schematic deployment diagram of a smart contract according to Embodiment 1 of the disclosure. The payee contract is implemented as a merchant module, the payment channel contract is implemented as a cashier module and the payer contract is implemented as a digital currency wallet module. The three modules are deployed on the same master device. Typical scenarios are as follows: a smart washing machine autonomously purchases laundry detergent when finding a shortage of laundry detergent, and a smart refrigerator autonomously purchases vegetables and fruits when finding a shortage of vegetables and fruits.

In another embodiment of the disclosure, the payee contract may be deployed in an associated device, and the payer contract and the payment channel contract are deployed in a same master device, such that the internet of things master device autonomously performs transaction payment for commodities and services with the associated device. Fig. 3 is a schematic deployment diagram of a smart contract according to Embodiment 2 of the disclosure. Similarly, the payer contract is implemented as a merchant module, the payment channel contract is implemented as a cashier module, and the payer contract is implemented as a digital currency wallet module. The cashier module and the digital currency wallet module are deployed on the same master device, and the merchant module is deployed on an associated device. Their typical scenario is that an internet of things device autonomously goes to a merchant to purchase commodities. For instance, a smart tractor automatically drives to a smart gas station for refueling and transaction payment when finding a shortage of fuel stored in a fuel tank.

In another embodiment of the disclosure, the payee contract and the payment channel contract may be deployed in the same master device, and the payer contract is deployed in an associated device, such that transaction payment of a shared device is implemented. Fig. 4 is a schematic deployment diagram of a smart contract according to Embodiment 1 of the disclosure. Similarly, the payer contract is implemented as a merchant module, the payment channel contract is implemented as a cashier module and the payer contract is implemented as a digital currency wallet module. The cashier module and the merchant module are deployed on the same master device, and the digital currency wallet module is deployed on an associated device. Their typical scenario is a shared device scenario. For instance, a shared car user uses his own wallet to pay for usage fees.

In another embodiment of the disclosure, the payee contract, the payer contract and the payment channel contract may be deployed on an internet of things device respectively, such that transaction payment with the payment channel contract as an intermediate associated device is implemented. For instance, a smart car books a movie ticket online and pays for the movie ticket by means of the master device on which the payment channel contract is deployed. Generally, an internet of things device is able to deploy a plurality of payee contracts and a plurality of payer contracts, but typically only deploys one payment channel contract. The payee contract, the payer contract and the payment channel contract are essentially machine contracts and all have capabilities to monitor events and implement automatic execution, wherein the payee contract mainly monitors an external event of an internet of things device, and the other two contracts monitor payment-related events.

The payee contract, the payer contract and the payment channel contract that support a payee and a payer in a payment transaction jointly execute internet of things payment through a invocation between the contracts. If two smart contracts invoking each other are not deployed on the same device, the two smart contracts can be in communication with each other through a near field or remote communication channel, such as near field communication (NFC), Bluetooth, cellular network and Wi-Fi, etc. In this way, communication is required to be established on the basis of secure communication channel (SCP), such that information security is ensured.

According to another embodiment of the disclosure, the method further includes: under a condition that the payee contract, the payer contract and the payment channel contract are deployed to different internet of things devices respectively, the payment channel contract is associated with the payee contract and the payer contract respectively, before the smart contract is switched from the monitoring state to an executing state as to perform internet of things payment; and under a condition that the payment channel contract and at least one of the payee contract and the payer contract are deployed to the same internet of things device, the payment channel contract is associated with the payee contract and the payer contract respectively during performing the contract registration.

A premise of transaction payment is establishment of association between the payee contract, the payer contract and the payment channel contract, that is, establishment of a communication protocol and a trust relation between three functional contracts. As an intermediate bridge contract which supporting and facilitating a payment transaction, the payment channel contract is required to establish associations of the payment channel contract with the payer contract and the payee contract respectively. Specific installation and deployment situations of the smart contract are different and mainly divided into two types. One situation is that under the condition that the payee contract, the payer contract and the payment channel contract are deployed to different internet of things devices respectively, the payment channel contract is associated with the payee contract and the payer contract respectively, before the smart contract is switched from the monitoring state to an executing state for internet of things payment. The other situation is that under the condition that the payment channel contract and at least one of the payee contract and the payer contract are deployed to the same internet of things device, the payment channel contract is associated with the payee contract and the payer contract during performing the contract registration.

According to yet another embodiment of the disclosure, the smart contract has identity data and is able to provide an identity verification service; the identity data of the smart contract is implemented on the basis of a digital certificate and a digital signature during performing the contract registration; and the basis of the identity verification service comprises the identity data of the smart contract and a digest value of executable code of the smart contract.

A smart contract instance of each smart contract after personal instantiation and registration includes a unique mechanism for determining its identity, and is able to provide an external identity verification service, wherein identity data of the smart contract is implemented on the basis of a digital certificate and a digital signature during performing the contract registration. For instance, an SM2 key pair and a corresponding digital certificate are generated or imported. When receiving an invocation request, a smart contract verifies information of an identity certificate, a digest value of executable code, etc. of an invoker smart contract to determine validity of the invoker smart contract. Furthermore, the identity certificate of the smart contract can be fixed or dynamically generated by a cryptographic signature mechanism.

According to yet another embodiment of the disclosure, an external event is monitored by the smart contract, and in a situation that the external event satisfies a trigger condition, the smart contract is switched from the monitoring state to an executing state for internet of things payment by the following steps: the external event is being monitored by the payee contract; and in the situation that the external event satisfies the trigger condition, the smart contract is switched from the monitoring state to the executing state, the payment channel contract is invoked by the payee contract, so as to invoke the payer contract by the payment channel contract to process a payment request, as to perform the internet of things payment.

The payee contract is switched from the monitoring state to the executing state by monitoring a trusted event of an external payment scenario satisfying a trigger condition. The payee contract invokes the payment channel contract and the payer contract through associations established between the payment channel contract and the payee contract as well as the payer contract, such that internet of things payment is implemented.

According to still another embodiment of the disclosure, after performing the internet of things payment, the method further including: a payment voucher returned by the payment channel contract is received by the payee contract, on the payment voucher is being verified, and the internet of things payment is completed in a situation that the verification passes, wherein payment voucher is generated after the payer contract performs the internet of things payment.

The payment voucher, as a receipt of payment completed by the payer contract, is required to have an integrity and authenticity protection mechanism, unless a necessary payment voucher cannot include privacy information. In a case that a payment voucher includes privacy information, a payer contract protects privacy information through information encryption.

According to the method for payment based on a smart contract deployed on an internet of things device, it can be seen that a life cycle of the entire machine contract mainly includes an initial state, a monitoring state and an executing state.

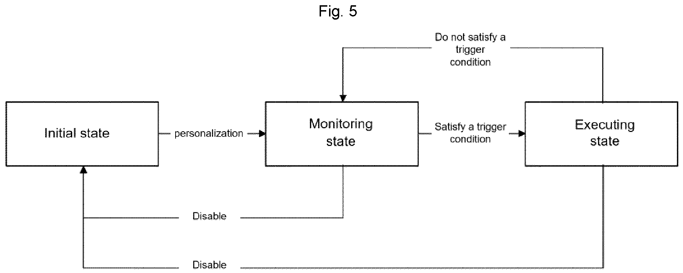

Fig. 5 is a schematic diagram of state switch of a machine contract according to an embodiment of the disclosure, wherein personalization refers to personal instantiation and registration in the disclosure. Specifically,
(1) In a case of an initial state, after a machine contract is installed and deployed, the machine contract in the initial state does not provide any service at a non-personalization stage. The machine contract at this stage can enter a monitoring state through personalization.
(2) In a case of a monitoring state, at a stage after a machine contract completed personal registration or executes a transaction, the machine contract is in an external event monitoring state. The machine contract in the monitoring state can enter the initial state through a disabling operation, which will cause all state information of the machine contract to be cleared.
(3) In an executing state, the machine contract enters an execution stage when a trigger condition of a machine contract is satisfied. The machine contract in an executing state still continues to monitor an external state. If the external state no longer satisfies the trigger condition of the machine contract, the machine contract will reenter the monitoring state. The machine contract in an executing state can also enter the initial state through a disabling operation.

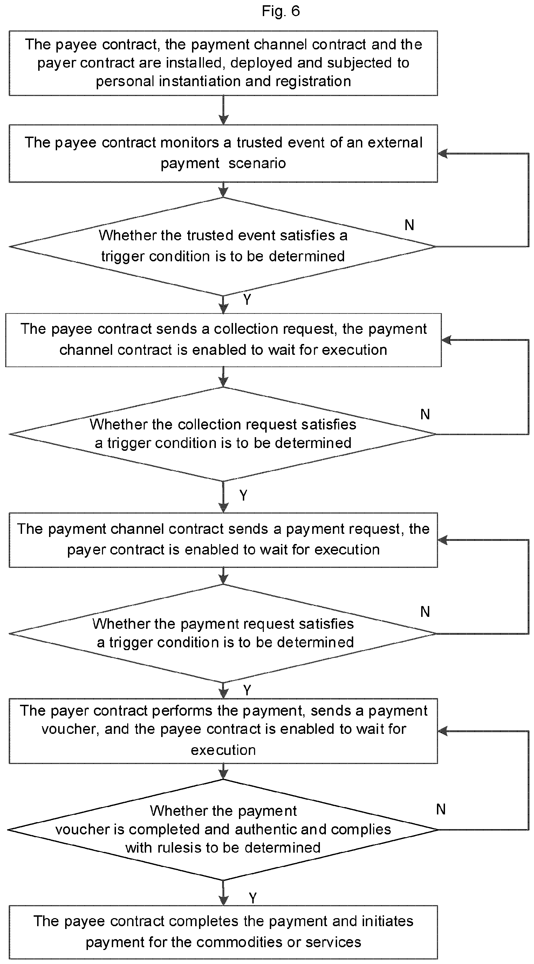

Fig. 6 is a schematic flow diagram of internet of things payment based on a smart contract according to an embodiment of the disclosure. After the payee contract, the payment channel contract and the payer contract are installed, deployed and subjected to personal instantiation and registration, the payee contract in a monitoring state monitors a trusted event of an external payment scenario. After verification of data integrity and authenticity of a trusted event, and conducting security verification of a basic environment of a payee contract, a trigger condition of the trusted event is determined. If the trigger condition is satisfied, the payee contract is switched from the monitoring state to an executing state and initiates a collection request including identity data to the payment channel contract. In this case, the payment channel contract waits for execution. Accordingly, if the trigger condition is not satisfied, the payee contract continues to monitor a trusted event of the external payment scenario. After receiving the collection request including the identity data sent by the payer contract, the payment channel verifies the collection request including the identity data. If a trigger condition is satisfied, the payment channel contract sends the payment request including the identity data. In this case, the payer contract waits for execution. Accordingly, if the trigger condition is not satisfied, the payment channel contract continues to wait for execution. After receiving the payment request including the identity data sent by the payment channel contract, the payer contract verifies the payment request including the identity data. If a trigger condition is satisfied, the payer contract makes digital currency wallet payment and sends a payment voucher. In this case, the payee contract waits for execution. Accordingly, if the trigger condition is not satisfied, the payer contract continues to wait for execution. The payment channel contract sends the payment voucher sent by the payer contract to the payee contract, and the payee contract determines integrity, authenticity and payment rules of the payment voucher. If a determination condition is satisfied, a payee recognizes completion of payment and initiates delivery of commodities or services. If the determination condition is not satisfied, the payee contract continues to wait for execution.

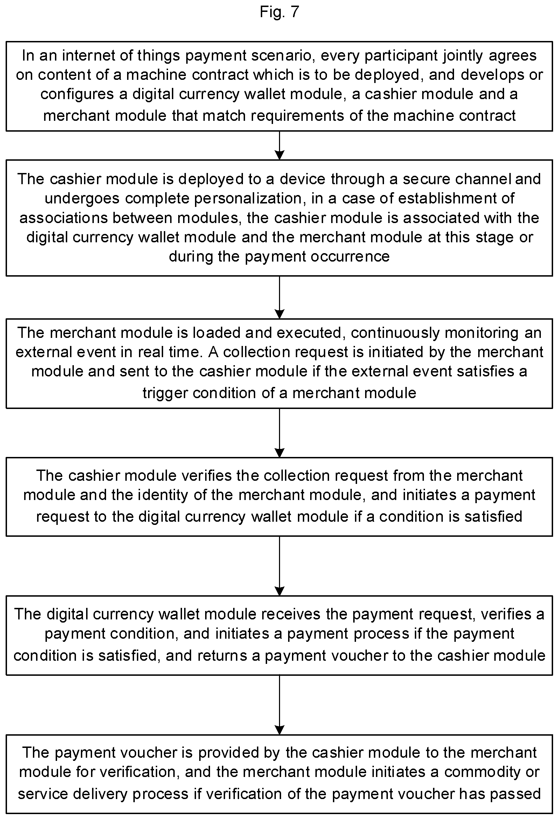

Fig. 7 is a schematic flow diagram of internet of things payment based on a machine contract according to another embodiment of the disclosure. In the embodiment, the payer contract is implemented as a merchant module, the payment channel contract is implemented as a cashier module and the payer contract is implemented as a digital currency wallet module. A smart contract deployed in an internet of things device is called a machine contract. Personal instantiation and registration is simply called personalization. A main flow of internet of things payment is as follows:
(1) In an internet of things payment scenario, every participant jointly agrees on content of a machine contract which is to be deployed, and develops or configures a digital currency wallet module, a cashier module and a merchant module that match requirements of the machine contract.
(2) The cashier module is deployed to a device through a secure channel and undergoes complete personalization, in a case of establishment of associations between modules, the cashier module is associated with the digital currency wallet module and the merchant module at this stage or during the payment occurrence, and the cashier module is enabled to enter an executing state only after the digital currency wallet module and the merchant module have been associated.
(3) The merchant module is loaded and executed, continuously monitoring an external event in real time. A collection request is initiated by the merchant module and sent to the cashier module if the external event satisfies a trigger condition of a merchant module machine contract, the merchant module perceives changes in the environmental state by infinitely repeating monitoring or by being woke up by a system.
(4) The cashier module verifies the collection request from the merchant module and the identity of the merchant module, and initiates a payment request to the digital currency wallet module if a condition is satisfied.
(5) The digital currency wallet module receives the payment request, verifies a payment condition, and initiates a payment process if the payment condition is satisfied, and returns a payment voucher to the cashier module, where the payment voucher need have an integrity and authenticity protection mechanism, and generally does not include privacy information.
(6) The payment voucher is provided by the cashier module to the merchant module for verification, and the merchant module initiates a commodity or service delivery process if verification of the payment voucher has passed.

The trusted event of the external payment scenario monitored by the payee contract is a hierarchical security model based on an initial trust root. A chain of trust is established from an unchangeable hardware initial trust root. Trust of the external payment scenario is ensured through trust transfer. Moreover, the smart contract is installed and deployed on an internet of things device, and a trusted external payment scenario can be actively perceived by loading an external sensor, such that an intelligentized automatic trusted perception capability is achieved.

In addition, the smart contract in the executing state still continues to monitor an external event. If the external state event no longer satisfies a trigger condition, the smart contract will reenter the monitoring state. Exemplarily, the payee contract continues to monitor the trusted event of the external payment scenario during execution of a collection process, performs bidirectional verification measurement on the trusted event, determine whether the trusted event satisfies the trigger condition, terminates the executing state if the trigger condition is not satisfied, returns to the monitoring state, and continues to monitor the external payment scenario.

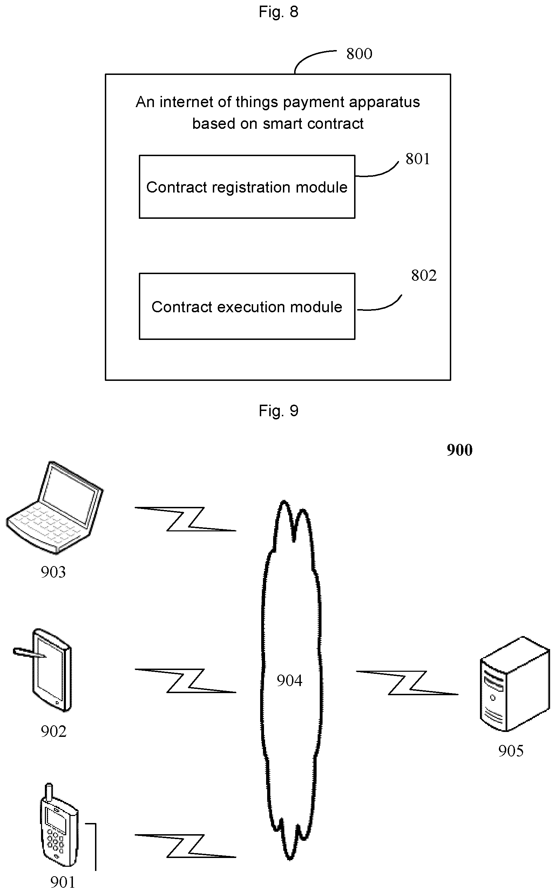

Fig. 8 is a schematic diagram of main modules of an apparatus for internet of things payment based on a smart contract according to an embodiment of the disclosure. As shown in Fig. 8, an internet of things payment apparatus 800 based on a smart contract mainly includes a contract registration module 801 and a contract execution module 802.

The contract registration module 801 is configured to deploy the smart contract to an internet of things device, perform a contract registration so as to enable the smart contract to enter a monitoring state.

For example, the smart contract has a security level, and before the deploying the smart contract to an internet of things device, the method also includes other steps: a security level of a module is acquired on the internet of things device to which the smart contract is deployed; and the security level of the module is compared with a security level of the smart contract, and a comparison result satisfies a security requirement is determined.

The smart contract is implemented as a software module on the internet of things device. Security of a hardware module on the internet of things device is implemented on the basis of an initial trust root solidified in the internet of things device. A software module on the internet of things device is guided and executed by the initial trust root or other software modules guided by the initial trust root.

The security level of the module is computed according to principles as follows: the security level of the module does not exceed a security level of a first initial trust root of an execution guide chain of the module, and the execution guide chain is formed by the initial trust root for guiding the module to execute or other software modules guided by the initial trust root; and a security level of a module enhanced by modules of which other initial trust root has a higher security levels is higher than a security level of an initial trust root; and a security level of a module that has no confidentiality protection when loading to perform is lower than the security level of an initial trust root.

The contract execution module 802 is configured to monitor an external event by the smart contract, and switch, in a situation that the external event satisfies a trigger condition, the smart contract from the monitoring state to an executing state for internet of things payment; wherein the smart contract in the executing state still continues to monitor the external event.

Generally, the smart contract includes three parts of a payee contract, a payer contract and a payment channel contract, and the three parts are separately deployed to one or more internet of things devices.

When the smart contract is registered or before payment occurs, under a condition that the payee contract, the payer contract and the payment channel contract are deployed to different internet of things devices respectively, the payment channel contract is associated with the payee contract and the payer contract respectively, before the smart contract is switched from the monitoring state to an executing state as to perform internet of things payment; and under a condition that the payment channel contract and at least one of the payee contract and the payer contract are deployed to the same internet of things device, the payment channel contract is associated with the payee contract and the payer contract respectively during performing the contract registration.

In addition, the smart contract has identity data and is able to provide an identity verification service; the identity data of the smart contract is implemented on the basis of a digital certificate and a digital signature during performing the contract registration; and the basis of the identity verification service comprises the identity data of the smart contract and a digest value of executable code of the smart contract.

The contract execution module 802 is further configured to monitor the external event by the payee contract; and switch, in the situation that the external event satisfies the trigger condition, the smart contract from the monitoring state to the executing state, invoke the payment channel contract by the payee contract, so as to invoke the payer contract by the payment channel contract to process a payment request, as to perform the internet of things payment.

The contract execution module 802 is further configured to receive by the payee contract, a payment voucher returned by the payment channel contract, perform verification on the payment voucher, and complete the internet of things payment in a situation that the verification passes, wherein the payment voucher is generated after the payer contract performs the internet of things payment.

Fig. 9 shows an exemplary system architecture 900 of an r internet of things payment method based on a smart contract or an internet of things payment apparatus based on a smart contract to which embodiments of the disclosure can be applied.

As shown in Fig. 9, the system architecture 900 may include terminal devices 901, 902 and 903, a network 904 and a server 905. The network 904 is configured to provide media for communication links between the terminal devices 901, 902 and 903 and the server 905. The network 904 may include various connection types, such as wired and wireless communication links, or fiber-optic cables, etc.

Users may interact with server 905 by means of the network 904 by using the terminal devices 901, 902 and 903 to receive or send messages, etc. Various communication client applications may be installed on the terminal devices 901, 902 and 903, such as an internet of things digital payment application and an internet of things payment wallet application (only for instance).

The terminal devices 901, 902 and 903 may be various electronic devices having display screens and supporting web browsing, and include but not limited to smart phones, tablet computers, laptop computers, desktop computers, etc.

The server 905 may be a server that provides various services, such as a background management server (only for instance) that provides support for internet of things payment based on a smart contract by a user by using the terminal devices 901, 902 and 903. After the background management server deployed the smart contract to the internet of things device, perform the contract registration so as to enable the smart contract to enter a monitoring state. An external event is monitored by the smart contract, and in a situation that the external event satisfies a trigger condition, the smart contract is switched from the monitoring state to an executing state for internet of things payment. The smart contract in the executing state still continues to monitor the external event, and feeds back a processing result (such as a payment success instruction, only for instance) to a terminal device.

It should be noted that an internet of things payment method based on a smart contract provided in an embodiment of the disclosure is generally executed by the server 905. Accordingly, and internet of things payment apparatus based on a smart contract is generally set in the server 905.

It should be understood that numbers of terminal devices, networks and servers in Fig. 9 are merely illustrative. Any number of terminal devices, networks and servers can be arranged according to implementation requirements.

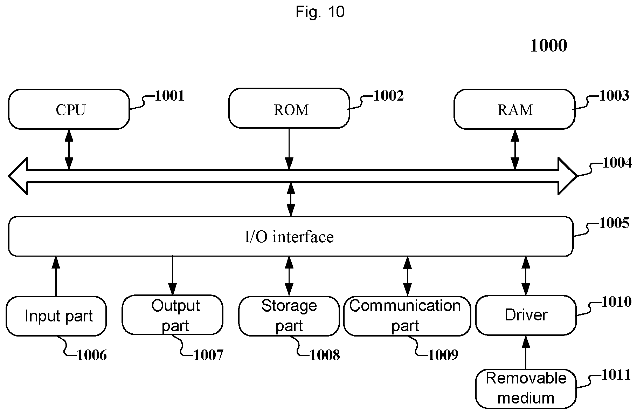

With reference to Fig. 10, a schematic structural diagram of a computer system 1000 suitable for implementing a terminal device according to an embodiment of the disclosure is shown. The electronic device shown in Fig. 10 is merely an instance, and should not bring any limitation on functions and usage ranges of the embodiments of the disclosure.

As shown in Fig. 10, the computer system 1000 includes a central processing unit (CPU) 1001, which may execute various suitable actions and processes according to a program stored in a read-only memory (ROM) 1002 or a program loaded into a random-access memory (RAM) 1003 from a storage part 1008. In the RAM 1003, various types of programs and data required for operations of the system 1000 are further stored. The CPU 1001, the ROM 1002 and the RAM 1003 are connected to each other by means of a bus 1004. An input/output (I/O) interface 1005 is further connected to the bus 1004.

The following components are connected to the I/O interface 1005: an input part 1006 including a keyboard, a mouse, etc., an output part 1007 including a cathode ray tube (CRT), a liquid crystal display (LCD), etc. and a speaker, etc., a storage part 1008 including a hard disk, etc., and a communication part 1009 including a network interface card, such as a local area network (LAN) card and a modem. The communication part 1009 executes communication via a network such as the Internet. A driver 1010 is further connected to the I/O interface 1005 according to requirements. A removable medium 1011, such as a magnetic disk, an optical disk, a magneto-optical disk and a semiconductor memory, is mounted on the driver 1010 according to requirements, such that a computer program read from the removable medium is installed into the storage part 1008 according to requirements.

In particular, according to an embodiment of the disclosure, the process described above with reference to a flow diagram may be implemented as a computer software program. For instance, an embodiment of the disclosure includes a computer program product. The computer program product includes a computer program carried on a computer-readable medium, and the computer program includes a program code for executing the method shown in the flow diagram. In such an embodiment, the computer program may be downloaded and mounted from a network by means of the communication part 1009, and/or mounted from the removable medium 1011 When executed by the central processing unit (CPU) 1001, the computer program executes the functions defined in a system in the disclosure.

It should be noted that the computer-readable medium in the disclosure may be a computer-readable signal medium, a computer-readable storage medium or their any combination. The computer-readable storage medium may be but is not limited to an electronic, magnetic, optical, electromagnetic, infrared or semiconductor system, apparatus or device, or any combination of the foregoing. More specific instances of the computer-readable storage medium may include but are not limited to an electrical connector having one or more wires, a portable computer disk, a hard disk, a random-access memory (RAM), a read-only memory (ROM), an erasable programmable read-only memory (EPROM or a flash memory), an optical fiber, a compact disc read-only memory (CD-ROM), an optical storage device, a magnetic storage device or any suitable combination of the foregoing. In the disclosure, the computer-readable storage medium may be any tangible medium including or storing a program, and the program may be used by or in connection with an instruction execution system, apparatus or device. In the disclosure, a computer-readable signal medium may include a data signal propagated in a baseband or as a part of a carrier wave, and a computer-readable program code is carried in the data signal. Such a propagated data signal may employ a plurality of forms, which include but are not limited to an electromagnetic signal, an optical signal or any suitable combination of the foregoing. The computer-readable signal medium may also be any computer-readable medium rather than a computer-readable storage medium, and may send, propagate or transmit a program that is used by or in combination with an instruction execution system, apparatus or device. Program code embodied on a computer-readable medium may be transmitted by using any appropriate medium, which includes but is not limited to wireless, a wire, an optical fiber cable, a radio frequency (RF), etc. or their any suitable combination.

Flow diagrams and block diagrams in figures show system architectures, functions and operations, which may be implemented according to systems, methods and computer program products in various embodiments of the disclosure. In this regard, each block in flow diagrams or block diagrams can represent a module, a program segment, or a part of a code, which include one or more executable instructions for implementing specified logical functions. It should also be noted that in some substitutive implementations, functions noted in blocks can also occur in sequences different from those in figures. For instance, functions represented by two continuous blocks can be executed substantially in parallel in practice, and sometimes implemented in reverse sequences, which depends on the involved functions. It should also be noted that each block in flow diagrams and/or block diagrams, and combinations of the blocks in the flow diagrams and/or the block diagrams, can be implemented by means of dedicated hardware-based systems that execute specified functions or operations, or can be implemented by means of combinations of dedicated hardware and computer instructions.

Units described in embodiments of the disclosure can be implemented in a form of software or hardware. The described unit may be arranged in a processor, which may be described as follows: a processor includes a contract registration module and a contract execution module, for instance.

Names of these modules do not constitute limitations on the modules in certain situations. For instance, a contract registration module can also be described as "configured to deploy the smart contract to an internet of things device, perform a contract registration so as to enable the smart contract to enter a monitoring state".

In another aspect, the disclosure further provides a computer-readable medium. The computer-readable medium may be included in the device described in the embodiment, or may exist independently without being assembled into the device. The computer-readable medium carries one or more programs. When the one or more programs are executed by one device, the device is enable to implement steps including: the smart contract is deployed to an internet of things device, and a contract registration is performed on the deployed smart contract so as to enable the smart contract to enter a monitoring state; and an external event is monitored by the smart contract, and in a situation that the external event satisfies a trigger condition, the smart contract is switched from the monitoring state to an executing state for internet of things payment; wherein the smart contract in the executing state still continues to monitor the external event.

The technical solutions of the embodiments of the disclosure have advantages or beneficial effects as follows: through the technical solution that deploy the smart contract to an internet of things device, perform a contract registration so as to enable the smart contract to enter a monitoring state; and monitoring an external event by the smart contract, and switching, in a situation that the external event satisfies a trigger condition, the smart contract from the monitoring state to an executing state for internet of things payment; wherein the smart contract in the executing state still continues to monitor the external event. On the basis of a trusted payment scenario actively perceived by the smart contract and a security awareness mechanism capable of bidirectional measurement, by applying the smart contract to an internet of things device, trusted payment, reliable user privacy protection and safe and convenient transaction payment are achieved.

The particular embodiments do not constitute limitations on the scope of protection of the disclosure. Those skilled in the art should understand that various modifications, combinations, subcombinations and substitutions can be made according to design requirements and other factors. Any modifications, equivalent substitutions, improvements, etc. within the spirit and principles of the disclosure should all fall within the scope of protection of the disclosure.

## Claims

1. An internet of things payment method based on a smart contract, comprising:
deploying the smart contract to an internet of things device, performing a contract registration so as to enable the smart contract to enter a monitoring state; and
monitoring an external event by the smart contract, and switching, in a situation that the external event satisfies a trigger condition, the smart contract from the monitoring state to an executing state for internet of things payment; wherein
the smart contract in the executing state still continues to monitor the external event.

2. The method as claimed in claim 1, wherein the smart contract comprises three parts of a payee contract, a payer contract and a payment channel contract, and the three parts are separately deployed to one or more internet of things devices.

3. The method as claimed in claim 2, wherein the monitoring an external event by the smart contract, and switching, in a situation that the external event satisfies a trigger condition, the smart contract from the monitoring state to an executing state for internet of things payment comprises:
monitoring the external event by the payee contract; and
switching, in the situation that the external event satisfies the trigger condition, the contract from the monitoring state to the executing state, invoking the payment channel contract by the payee contract, so as to invoke the payer contract by the payment channel contract to process a payment request, as to perform the internet of things payment.

4. The method as claimed in claim 3, after performing the internet of things payment, the method further comprising:
receiving, by the payee contract, a payment voucher returned by the payment channel contract, performing verification on the payment voucher, and completing the internet of things payment in a situation that the verification passes, wherein the payment voucher is generated after the payer contract performs the internet of things payment.

5. The method as claimed in claim 2, the method further comprising:
under a condition that the payee contract, the payer contract and the payment channel contract are deployed to different internet of things devices respectively, associating respectively the payment channel contract with the payee contract and the payer contract before switching the smart contract from the monitoring state to an executing state as to perform internet of things payment; and
under a condition that the payment channel contract and at least one of the payee contract and the payer contract are deployed to the same internet of things device, associating respectively the payment channel contract with the payee contract and the payer contract during performing the contract registration.

6. The method as claimed in claim 1, wherein the smart contract has identity data and is able to provide an identity verification service;
the identity data of the smart contract is implemented on the basis of a digital certificate and a digital signature during performing the contract registration; and
the basis of the identity verification service comprises the identity data of the smart contract and a digest value of executable code of the smart contract.

7. The method as claimed in claim 1, wherein the smart contract has a security level, and before the deploying the smart contract to an internet of things device, the method further comprises:
acquiring a security level of a module on the internet of things device to which the smart contract is to be deployed; and
comparing the security level of the module with a security level of the smart contract, and determining that a comparison result satisfies a security requirement.

8. The method as claimed in claim 7, wherein the smart contract is implemented as a software module on the internet of things device;
security of a hardware module on the internet of things device is implemented on the basis of an initial trust root solidified in the internet of things device; and
the software module on the internet of things device is guided and executed by the initial trust root, or by other software modules guided by the initial trust root.

9. The method as claimed in claim 8, wherein the security level of the module is computed according to principles as follows:
the security level of the module does not exceed a security level of a first initial trust root of an execution guide chain of the module, and the execution guide chain is formed by the initial trust root for guiding the module to execute, or other software modules guided by the initial trust root;
a security level of a module enhanced by a module of which other initial trust root has a higher security level is higher than the security level of the initial trust root; and
a security level of a module that has no confidentiality protection when loading to perform is lower than the security level of the initial trust root.

10. An internet of things payment apparatus based on a smart contract, comprising:
a contract registration module, is configured to deploy the smart contract to an internet of things device, perform a contract registration so as to enable the smart contract to enter a monitoring state; and
a contract execution module, is configured to monitor an external event by the smart contract, and switch, in a situation that the external event satisfies a trigger condition, the smart contract from the monitoring state to an executing state for internet of things payment; wherein the smart contract in the executing state still continues to monitor the external event.

11. A mobile electronic device terminal, comprising:
one or more processors; and
a storage apparatus, which is configured to store one or more programs, wherein
the one or more programs cause the one or more processors to implement the method as claimed in any one of claims 1-9 when executed by the one or more processors.

12. A computer-readable medium, storing a computer program, wherein the program implements the method as claimed in any one of claims 1-9 when executed by a processor.
